(19) Europäisches Patentamt
European Patent Office
Office européen des brevets

(11) EP 3 912 470 A1

(12) EUROPEAN PATENT APPLICATION
published in accordance with Art. 153(4) EPC

(43) Date of publication:
**24.11.2021 Bulletin 2021/47**

(21) Application number: **20741295.8**

(22) Date of filing: **16.01.2020**

(51) Int Cl.:
***A01N 35/02*** *(2006.01)* ***A01N 35/04*** *(2006.01)*
***A01P 21/00*** *(2006.01)* ***A01N 25/00*** *(2006.01)*
***A01N 43/16*** *(2006.01)*

(86) International application number:
**PCT/JP2020/001350**

(87) International publication number:
**WO 2020/149373 (23.07.2020 Gazette 2020/30)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **16.01.2019 JP 2019005553**

(71) Applicants:
- **Idemitsu Kosan Co., Ltd.**
  **Chiyoda-ku**
  **Tokyo, 100-8321 (JP)**
- **SDS Biotech K. K.**
  **Tokyo 103-0004 (JP)**

(72) Inventors:
- **ISHIDA, Shiori**
  **Tsukuba-shi, Ibaraki 300-2646 (JP)**
- **INAI, Koji**
  **Tsukuba-shi, Ibaraki 300-2646 (JP)**
- **TANAKA, Motoki**
  **Tokyo 103-0004 (JP)**
- **NOMOTO, Takashi**
  **Tokyo 103-0004 (JP)**

(74) Representative: **Vossius & Partner Patentanwälte Rechtsanwälte mbB**
**Siebertstraße 3**
**81675 München (DE)**

# (54) PLANT GROWTH REGULATING AGENT

(57) The present invention aims to provide a plant growth regulating agent for improving environmental stress resistance of a plant, for growth promotion of a plant, or for antimicrobial purpose in a plant, and provides a plant growth regulating agent for improving environmental stress resistance of a plant, for growth promotion of a plant, or for antimicrobial purpose in a plant, the plant growth regulating agent including hesperidin or a hesperidin derivative, or a flavonoid, as an effective component.

EP 3 912 470 A1

## Description

### TECHNICAL FIELD

The present invention relates to a plant growth regulating agent having an effect that improves the resistance of a plant to environmental stress. The present invention also relates to a plant growth regulating agent for growth promotion of a plant, and for antimicrobial purpose in a plant.

### BACKGROUND ART

In the light of the explosive growth of the world population, there is an urgent need to increase the food supply. However, agricultural field available for crop cultivation are limited, and it has been said, moreover, that environmental factors such as global warming and unseasonable weather are causing loss of the crop yield. Thus, there is an increasing demand for plant growth regulating agents which ameliorate the effects of environmental stresses affecting crops, and which improve the yield and the quality of crops by maintenance and promotion of their growth.

Examples of the method for improving the environmental stress resistance of a plant include breeding, preparation of a plant by genetic modification of a stress resistance-related gene(s), and use of a plant growth regulating agent that ameliorates the environmental stress. The breeding, and the preparation of a recombinant crop have drawbacks in that they are applicable only to a limited number of crop species, that the place for the cultivation is limited, and that the breeding, and the preparation of the recombinant crop are time-consuming and costly.

Thus, studies have been widely carried out for developing plant growth regulating agents which are applicable to a variety of plants, and which are applicable in any place. These studies are being carried out in fields such as plant hormones (Non-patent Documents 1 and 2) and effective components of agricultural chemicals.

There are problems, however, that the plant growth regulating agents according to the conventional techniques have low storage stability and safety, and especially that the stress resistance-improving effect is insufficient. For example, a method of improving the environmental stress resistance of a plant by treating the plant with a plant-derived product containing at least one of sanguinarine and its salts (Patent Document 4) has been reported. However, for stable improvement of the environmental stress resistance of a plant, the method requires treatment at several ppm to several ten ppm, and extraction of the component from a plant requires solvent extraction treatment, subcritical water extraction treatment, and thermal extraction treatment, so that its industrial mass production is not easy. Moreover, since the component has low storage stability, production of its stable effect requires a plurality of times of treatment.

On the other hand, it has been shown, for example, that foliar spraying of a flavonoid genistein, daidzein, hesperetin, or naringenin for plants produces growth-promoting effects such as an increase in the weight of the above-ground part and an increase in the yield (Patent Document 1). However, there has been no suggestion on an effect that improves the resistance to an environmental stress. Furthermore, although it is known that plants placed under dry stress conditions exhibit stress response which causes accumulation of flavonoids in the body, effectiveness of external application of flavonoids by foliar spraying or the like has not been shown (Non-patent Document 3).

Furthermore, although hesperidin is known to have an antioxidant action, anti-allergic action, anti-inflammatory action, and the like (Patent Document 2, Non-patent Document 4), these actions are basically actions for animals and humans. Hesperidin is known to have an antimicrobial action, and to exhibit a control effect against citrus diseases, rice blast disease, and cucumber anthracnose (Patent Document 3). Although Patent Document 1 suggests that foliar spraying of hesperidin to a plant produces growth-promoting effects such as an increase in the weight of the above-ground part and an increase in the yield, there have been neither data based on its practical use, nor data on an effect that that improves the resistance to an environmental stress.

### PRIOR ART DOCUMENTS

#### Patent Documents

Patent Document 1: WO 2014/160826
Patent Document 2: JP H4-295428 A
Patent Document 3: JP S63-19484 B
Patent Document 4: JP 5544450 B

Non-patent Documents

Non-patent Document 1: Brian, P. W. "Effects of gibberellins on plant growth and development." Biological Reviews 34.1 (1959): 37-77.
Non-patent Document 2: Bottini Ruben, Fabricio Cassan, and Patricia Piccoli. "Gibberellin production by bacteria and its involvement in plant growth promotion and yield increase." Applied microbiology and biotechnology 65.5 (2004): 497-503.
Non-patent Document 3: Nakabayashi Ryo, et al. "Enhancement of oxidative and drought tolerance in Arabidopsis by overaccumulation of antioxidant flavonoids." The Plant Journal 77.3 (2014): 367-379.
Non-patent Document 4: Galati, E. M., et al. "Biological effects of hesperidin, a citrus flavonoid. (Note I): anti-inflammatory and analgesic activity." Farmaco (Societa chimica italiana: 1989) 40.11 (1994): 709-712.

SUMMARY OF THE INVENTION

PROBLEMS TO BE SOLVED BY THE INVENTION

An object of the present invention is to provide a plant growth regulating agent with which a plant before being exposed to an environmental stress can be preliminarily treated to improve the resistance of the plant to the environmental stress, to allow healthy growth of the plant stably and highly efficiently even under the environmental stress conditions, and a method of application of the plant growth regulating agent to a plant to achieve highly efficient improvement of the resistance to the environmental stress. Another object of the present invention is to provide a plant growth regulating agent for growth promotion of a plant, or for antimicrobial purpose in a plant, which plant growth regulating agent promotes the growth of the plant or prevents a disease of the plant, to improve the yield or quality of the crop.

MEANS FOR SOLVING THE PROBLEMS

As a result of intensive study, the present inventors discovered that the above problem can be solved by including hesperidin or a hesperidin derivative, or a flavonoid, as an effective component in a plant growth regulating agent, a plant growth promoting agent, or an antimicrobial agent, thereby reaching the present invention.
More specifically, the present invention is as follows.

<1> A plant growth regulating agent for improving environmental stress resistance of a plant, the plant growth regulating agent comprising hesperidin or a hesperidin derivative, or a flavonoid, as an effective component.
<2> The plant growth regulating agent according to <1>, wherein the environmental stress is at least one stress selected from the group consisting of high temperature, low temperature, osmotic pressure, drought, heavy rainfall, pH, ultraviolet, and high salt.
<3> The plant growth regulating agent according to <1> or <2>, wherein the plant is at least one plant selected from the group consisting of plants belonging to the family Solanaceae, plants belonging to the family Apiaceae, plants belonging to the family Chenopodiaceae, plants belonging to the family Compositae, plants belonging to the family Leguminosae, plants belonging to the family Liliaceae, plants belonging to the family Rosaceae, plants belonging to the family Cucurbitaceae, plants belonging to the family Convolvulaceae, plants belonging to the family Theaceae, plants belonging to the family Cupressaceae, plants belonging to the family Myrtaceae, plants belonging to the family Oleaceae, plants belonging to the family Rutaceae, plants belonging to the family Vitaceae, plants belonging to the family Lamiaceae, plants belonging to the family Poaceae, plants belonging to the family Cruciferae, plants belonging to the family Musaceae, plants belonging to the family Anacardiaceae, and plants belonging to the family Caricaceae.
<4> The plant growth regulating agent according to any one of <1> to <3>, wherein the hesperidin derivative is at least one hesperidin derivative selected from the group consisting of $\alpha$-monoglucosyl hesperidin, hesperidin methylchalcone, neohesperidin, and neohesperidin dihydrochalcone.
<5> The plant growth regulating agent according to any one of <1> to <4>, wherein the flavonoid is at least one flavonoid selected from the group consisting of hesperetin, tangeretin, nobiletin, and phloretin.
<6> The plant growth regulating agent according to any one of <1> to <5>, wherein the flavonoid is at least one flavonoid selected from the group consisting of tangeretin, nobiletin, and phloretin.
<7> The plant growth regulating agent according to any one of <1> to <6>, comprising hesperidin as an effective component.
<8> The plant growth regulating agent according to any one of <1> to <7>, comprising hesperidin and neohesperidin

as effective components.
<9> A method of improving environmental stress resistance of a plant, the method comprising the step of applying the plant growth regulating agent according to any one of <1> to <8> to a plant.
<10> The method according to <9>, wherein the application is to a soil, a medium, or a plant body.
<11> The method according to <9> or <10>, wherein the application is at least one application selected from the group consisting of soil incorporation, drenching, seed dressing, seed soaking, and foliar spraying.
<12> A plant growth regulating agent for growth promotion of a plant, the plant growth regulating agent comprising hesperidin or a hesperidin derivative, or a flavonoid, as an effective component.
<13> The plant growth regulating agent according to <12>, comprising hesperidin as an effective component.
<14> A plant growth regulating agent for antimicrobial purpose in a plant, the plant growth regulating agent comprising hesperidin or a hesperidin derivative, or a flavonoid, as an effective component.
<15> The plant growth regulating agent according to <14>, comprising hesperidin as an effective component.
<16> Use of hesperidin or a hesperidin derivative, or a flavonoid in the manufacture of an environmental stress resistance improving agent for a plant.
<17> Use of hesperidin or a hesperidin derivative, or a flavonoid, for improving environmental stress resistance of a plant.

## EFFECT OF THE INVENTION

The present invention can provide a plant growth regulating agent with which a plant before being exposed to an environmental stress can be preliminarily treated to improve the resistance of the plant to the environmental stress, and which is safe to the human body and cost-effective, and a plant growth regulating agent whose application to a plant enables highly efficient improvement of the resistance to the environmental stress. The present invention can also provide a plant growth regulating agent for growth promotion of a plant, or for antimicrobial purpose in a plant.

## BRIEF DESCRIPTION OF THE DRAWINGS

Fig. 1 is a photograph illustrating the result of application of a plant growth regulating agent to bent grass (drawing-substituting photograph).

## MODE FOR CARRYING OUT THE INVENTION

The plant growth regulating agent of the present invention comprises hesperidin or a hesperidin derivative, or a flavonoid, as an effective component. Two or more kinds of hesperidin and/or a hesperidin derivative(s), and/or a flavonoid(s), may be used.
The hesperidin derivative includes compounds obtained by substituting one or several (for example, two or three) substituents of hesperidin, and specific examples thereof include α-monoglucosyl hesperidin, hesperidin methylchalcone, neohesperidin, and neohesperidin dihydrochalcone.
Examples of the flavonoid include compounds containing a flavan skeleton, and precursors thereof, such as hesperetin, tangeretin, nobiletin, and phloretin.
Among these, hesperidin is more preferably used.
Hesperidin has the following structure. In this structure, $R_1$ represents H; $R_2$ represents rutinosyl, $R_3$ represents H; $R_4$ represents OH; $R_5$ represents H; $R_6$ represents H; $R_7$ represents OH; $R_5$ represents $OCH_3$; and $R_9$ represents H.

[Chem 1]

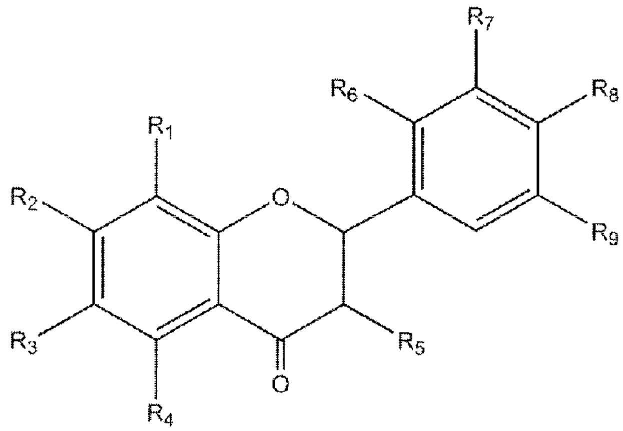

The hesperidin may be prepared from a natural source, or may be prepared by chemical synthesis. Examples of the natural source include, but are not limited to, citrus fruits such as orange, lemon, tangerine, and citron. The method of preparing hesperidin from citrus fruits is known. Although the hesperidin may be a crudely purified product or a concentrated liquid containing hesperidin, a purified product is more preferably used.

The plant growth regulating agent of the present invention may contain, in combination with hesperidin, neohesperidin (which has the structural formula described above wherein $R_1$ represents H; $R_2$ represents neohesperidosyl; $R_3$ represents H; $R_4$ represents OH; $R_5$ represents H; $R_6$ represents H; $R_7$ represents OH; $R_8$ represents $OCH_3$; and $R_9$ represents H) as an effective component. By the inclusion of hesperidin and neohesperidin, the ability to improve the resistance of the plant to the environmental stress can be enhanced by the synergistic effect.

The growth regulation function of the plant growth regulating agent includes an action that improves the resistance of a plant to an environmental stress, an action that promotes the growth of a plant, and an antimicrobial action for a plant.

Examples of the environmental stress include stresses due to high temperature, low temperature, drought, osmotic pressure, heavy rainfall, pH, ultraviolet, high salt, or the like.

Plants commonly have an optimum growth temperature of about 15 to 30°C, and the optimum temperature varies depending on the plant. For example, lettuce, cabbage, and carrot have optimum temperatures of 15 to 20°C, and *Brassica rapa* var. *perviridis* (komatsuna) has an optimum temperature of 20 to 25°C. The high-temperature stress means a state in summer or in a tropical/subtropical area or the like where, for example, the plant is temporarily or constantly exposed to high-temperature conditions in which the temperature is higher than the optimum temperature of the crop by 5°C or more. The low-temperature stress means a state in winter or in a cold area where, for example, the plant is temporarily or constantly exposed to low-temperature conditions in which the temperature is lower than the optimum temperature by 5°C or more.

The dry stress means a state where the plant is temporarily or constantly exposed to conditions in which the plant body cannot retain a sufficient amount of water for its growth or life activity.

The osmotic-pressure stress includes both high-osmotic-pressure stress and low-osmotic-pressure stress, and the pH stress includes both an acidic pH stress and an alkaline pH stress.

The heavy-rainfall stress includes a stress due to rainfall that continues for not less than a certain period, such as not less than 1 week, and the ultraviolet stress includes a stress due to exposure to ultraviolet for not less than a certain period.

The high-salt stress includes a stress due to exposure to salt at a concentration that causes inhibition or reduction of the plant growth.

Usually, in the presence of the environmental stresses described above, a plant falls into an undesirable state such as a state where the plant cannot grow, a state where the growth is inhibited, a state where the development does not occur, a state where the plant cannot bear fruits, or a state where flowering does not occur. In the present invention, the effect of exposure of a plant to an environmental stress can be evaluated by the following method. Values such as the germination rate of the plant body, the fresh weight and dry weight of the plant body, the degree of elongation or the like, the fruit setting rate, and the flower setting rate in the case of cultivation under environmental stress conditions (non-addition group to which hesperidin or the like is not applied; in the presence of an environmental stress) are compared with values such as the germination rate of the plant body, the fresh weight and dry weight of the plant body, the degree of elongation, the fruit setting rate, and the flower setting rate in the case of cultivation under conditions suitable for the growth (normal cultivation; in the absence of the environmental stress), and the rates of decrease are

calculated (see equation 1 below). The plant body can be judged to have been affected by the environmental stress when a decrease(s) by not less than 10% is/are found.

(Equation 1)

Rate of decrease (%)

= {(each parameter value of the plant body in the non-addition group in the case of cultivation under conditions suitable for the growth) - (each parameter value of the plant body in the non-addition group in the case of cultivation under environmental stress conditions)} / (each parameter value of the plant body in the non-addition group in the case of cultivation under conditions suitable for the growth) × 100

The improvement of the resistance to an environmental stress means improvement of an undesirable state into which a plant usually falls in the presence of the above-described stresses, such as a state where the plant cannot grow, a state where the growth is inhibited, a state where the development does not occur, a state where the plant cannot bear fruits, or a state where flowering does not occur, which improvement is achieved by application of hesperidin or the like. The improvement of the resistance to an environmental stress can be confirmed by cultivating the plant in the presence of the environmental stress, and investigating whether the plant is in a better condition than the plant in a control group to which hesperidin or the like is not applied, by comparing the growth state of the plant, the germination rate, the fresh weight and dry weight of the plant body, the degree of elongation or the like, the fruit setting rate, the flower setting rate, conditions that can be visually evaluated from the external appearance, the average degree of damage, and the like with those of the plant in the control group. In the present invention, the effect of hesperidin or the like that improves the resistance of a plant to an environmental stress can be evaluated by the following method. Values such as the germination rate of the plant body, the fresh weight and dry weight of the plant body, the degree of elongation or the like, the fruit setting rate, and the flower setting rate in the case of cultivation with application of hesperidin or the like under environmental stress conditions (hesperidin or the like application group; in the presence of the environmental stress) are compared with values such as the germination rate of the plant body, the fresh weight and dry weight of the plant body, the degree of elongation or the like, the fruit setting rate, and the flower setting rate in the case of cultivation under environmental stress conditions (non-addition group to which hesperidin or the like is not applied; in the presence of the environmental stress), and the rates of increase are calculated (see equation 2 below). The hesperidin or the like can be judged to have an effect that improves the resistance to the environmental stress when each parameter value of the plant body in the cultivation under environmental stress conditions is improved by not less than 10% compared to that in the non-addition group, which is taken as 100%. The subject whose environmental stress resistance is to be improved is not limited to the whole plant body, and may be at least one plant organ such as the flower, leaf, fruit, stem, or root.

(Equation 2)

Rate of increase (%)

= (each parameter value of the plant body in the hesperidin or the like application group in the case of cultivation under environmental stress conditions) / (each parameter value of the plant body in the non-addition group in the case of cultivation under environmental stress conditions) × 100

As a result of the improvement of the resistance of the plant to the environmental stress, the growth of the plant

can be regulated. The regulation of the growth of the plant includes promotion, maintenance, and improvement of the growth. The growth is not limited to the growth/development of the whole plant body, and may be the growth of at least one plant organ such as the flower, leaf, fruit, stem, or root.

The growth promotion of a plant means that, in the case of cultivation under conditions suitable for the growth (normal cultivation; in the absence of an environmental stress), the growth state of the plant, the germination rate, the fresh weight and dry weight of the plant body, the degree of elongation or the like, the fruit setting rate, the flower setting rate, and conditions that can be visually evaluated from the external appearance are in better conditions compared to those of the plant in a non-addition group to which hesperidin or the like is not applied.

In the present invention, the plant growth-promoting effect of hesperidin or the like can be evaluated by the following method. Under conditions suitable for the growth of the plant, values such as the germination rate of the plant body, the fresh weight and dry weight of the plant body, the degree of elongation or the like, the fruit setting rate, and the flower setting rate in the case of cultivation with application of hesperidin or the like (hesperidin or the like application group; in the absence of an environmental stress) are compared with values such as the germination rate of the plant body, the fresh weight and dry weight of the plant body, the degree of elongation, the fruit setting rate, and the flower setting rate in the case of cultivation without application of hesperidin or the like (non-addition group to which hesperidin or the like is not applied; in the absence of the environmental stress), and the rates of increase/decrease are calculated (see equation 3 below). The hesperidin or the like can be judged to have a plant growth-promoting effect when an increase(s) by not less than 5% is/are found. The target of the plant growth-promoting effect is not limited to the whole plant body, and may be at least one plant organ such as the flower, leaf, fruit, stem, or root.

(Equation 3)

Increase/decrease rate (%)

= {(each parameter value of the plant body in the hesperidin or the like application group in the case of cultivation under conditions suitable for the growth)) - (each parameter value of the plant body in the non-addition group in the case of cultivation under conditions suitable for the growth)} / (each parameter value of the plant body in the non-addition group in the case of cultivation under conditions suitable for the growth) $\times$ 100

The plant growth regulating agent may be used for antimicrobial purpose in a plant. For example, it has a control effect against rice seedling blight, cucumber powdery mildew, tomato late blight, and the like.

The plant species to be protected by the present invention is not limited, and may be either a dicotyledon or a monocotyledon. Examples of the plant species include: plants belonging to the family Solanaceae, such as tomato, eggplant, bell pepper, capsicum, and potato; plants belonging to the family Apiaceae, such as carrot and celery; plants belonging to the family Chenopodiaceae, such as beet and spinach; plants belonging to the family Compositae, such as crown daisy, lettuce, burdock, and gerbera; plants belonging to the family Leguminosae, such as soybean, pea, glycyrrhiza, alfalfa, and sweet pea; plants belonging to the family Liliaceae, such as green onion, onion, garlic, and tulip; plants belonging to the family Rosaceae, such as strawberry, rose, apple, peach, and pear; plants belonging to the family Cucurbitaceae, such as watermelon, melon, and cucumber; plants belonging to the family Convolvulaceae, such as sweet potato; plants belonging to the family Theaceae, such as tea plant and camellia; plants belonging to the family Cupressaceae, such as Japanese cedar and Japanese cypress; plants belonging to the family Myrtaceae, such as eucalyptus; plants belonging to the family Oleaceae, such as olive; plants belonging to the family Rutaceae, such as *Citrus unshiu* and lemon; plants belonging to the family Vitaceae, such as grape; plants belonging to the family Lamiaceae, such as perilla, basil, mint, rosemary, and sage; plants belonging to the family Poaceae, such as rice, wheat, maize, lawn grass, ryegrass, and bent grass; plants belonging to the family Cruciferae, such as *Brassica rapa* var. *perviridis* (komatsuna), *Brassica rapa* var. *chinensis* (Qing geng cai), broccoli, and cabbage; plants belonging to the family Musaceae, such as banana; plants belonging to the family Anacardiaceae, such as mango; plants belonging to the family Caricaceae; and other tropical plants.

The hesperidin or the like may be applied alone to the plant, or may be used in combination with a carrier(s) and/or a component(s) that may be used for a plant growth regulating agent. For example, an adjuvant, a surfactant, a

watersoluble polymer, a lubricant, an antioxidant, an antiseptic, and/or the like may be added. Depending on the trading conditions in the market, the storage conditions, and the use conditions, the plant growth regulating agent may be appropriately modified by, for example, including not only the hesperidin or the like, but also other components as long as the effectiveness of the hesperidin or the like is not deteriorated, and as long as the plant is not adversely affected.

The formulation of the plant growth regulating agent is not limited, and the plant growth regulating agent may be in the form of, for example, a powder formulation, a granular formulation, a powder-granular formulation, a wettable powder formulation, a wettable granular formulation, an emulsifiable formulation, a liquid formulation, an oil formulation, a flowable formulation, an emulsion formulation, an AL formulation, a microcapsule formulation, or the like.

In cases where the formulation of the plant growth regulating agent is a liquid formulation, a powder formulation, or a granular formulation, the plant growth regulating agent may be directly sprayed, or may be diluted to a predetermined concentration with a solvent such as water followed by application by spraying, mist spraying, drenching, or the like.

The application of the plant growth regulating agent is carried out for the soil or medium at the base of the plant body, or for at least one organ of the plant body to be protected (for example, the flower, leaf, fruit, stem, or root). Regarding the timing of the application, the plant growth regulating agent may be applied at the time of sowing, in the early stage of the growth, in the middle stage of the growth, in the late stage of the growth, before the harvest, and/or (after the harvest) of the plant. More specifically, the application is carried out by a method such as soil incorporation, medium incorporation, drenching, seed dressing, seed spraying, seed soaking, or foliar spraying.

In a mode in which the plant growth regulating agent is used after dilution, the content of the hesperidin or the like (when two or more components are used, their total content) in the plant growth regulating agent is usually 0.1 to 20% by weight. The content is preferably not less than 0.5% by weight, more preferably not less than 1% by weight, and is preferably not more than 15% by weight, more preferably not more than 10% by weight. In a mode in which the plant growth regulating agent is used without dilution, the content is 0.00001 to 0.002% by weight. The content is preferably not less than 0.00005% by weight, more preferably not less than 0.0001% by weight, and is preferably not more than 0.0015% by weight, more preferably not more than 0.001% by weight.

Regarding the concentration of the plant growth regulating agent in the use, the plant growth regulating agent may be appropriately diluted such that the concentration of the hesperidin or the like (when two or more components are used, their total concentration) is, for example, 0.1 to 1000 ppm, preferably 1 to 100 ppm, more preferably 1 to 10 ppm, followed by application by a method such as soil incorporation, medium incorporation, foliar spraying, or drenching.

For each crop species, there is an optical treatment concentration range of the hesperidin or the like in which the resistance to an environmental stress can be improved. By the treatment at a treatment concentration within this concentration range, a sufficient effect can be obtained without, for example, phytotoxicity or showing a tendency of growth suppression.

The amount of the application is not limited as long as the environmental stress resistance-improving effect can be produced. The application may be carried out one or more times.

In cases where plant seeds are treated with the plant growth regulating agent by seed dressing, seed spraying, seed soaking, or the like, the plant growth regulating agent may be diluted, when necessary, such that the concentration of the hesperidin or the like (when two or more components are used, their total concentration) is, for example, 0.1 to 10,000 ppm, preferably 1 to 1000 ppm. The plant seeds may be treated one or more times therewith. The treated seeds may then be sown, and the plant may be cultivated in an environment that may include an environmental stress.

Similarly to the case of the spray treatment, for each crop species, there is an optical treatment concentration range of the hesperidin or the like in which the resistance to an environmental stress can be improved. By the treatment at a treatment concentration within this concentration range, a sufficient effect can be obtained without phytotoxicity or showing a tendency of growth suppression.

By preliminarily applying the plant growth regulating agent to the plant to be protected before the plant is exposed to an environmental stress, the plant after the application can maintain the plant body even under the environmental stress, or can recover quickly after exposure to the environmental stress. Thus, by preliminarily applying the plant growth regulating agent to the plant, the plant can have improved environmental stress resistance, and hence the plant to be protected, especially an agricultural crop, a garden plant, or the like, can be simply protected against the environmental stress. The timing of the application of the plant growth regulating agent may be during the period when the plant to be protected is exposed to the environmental stress.

The plant growth regulating agent may be used in combination with conventional plant growth regulating agents, such as fertilizers, chemical pesticides, microbial pesticides (such as *Bacillus* pesticides), and other stress resistance-improving agents.

## EXAMPLES

The present invention is described below in more detail by way of Examples, but the present invention is not limited to these Examples.

<Example 1: High-Temperature Stress Petri Dish Test (Lettuce)>

Purpose: Comparison with other natural products in terms of the effect Methods:

For seeds, 2% water agar medium (using water as the solvent), which was prepared such that hesperidin or the like was contained at a final concentration of 0.1 ppm as shown in Table 1, was filled into square Petri dishes ("model number: D-210-16", manufactured by As One Corporation). Before high-temperature treatment, lettuce (Green Wave, Takii & Co., Ltd.) was sown on 2% water agar medium, and lettuce seedlings on day 2 after the sowing were transplanted to the above-described agar medium to which the hesperidin or the like was added. At the time of the transplantation, the tip of the root was marked. Each Petri dish after the transplantation was placed in an incubator ("model number: FLI-2010A", manufactured by EYELA) at an angle of 45° with respect to the bottom surface, and high-temperature treatment was carried out at 42°C for 1.5 hours. Thereafter, culture was similarly performed at 23°C for 2 days, and then the increase in the root length was evaluated in terms of elongation from the tip of the root of each seedling at the time of the transplantation. For each group, 15 measurement results were obtained (N=15). The results are shown in Table 1.

In the present test, the root length in the case of normal cultivation was 17.5 mm in average, and the root length in the case of cultivation under the high-temperature treatment conditions (non-addition group) was 9.3 mm in average. Thus, the decrease rate was 47%, and hence the plants were judged to have been affected by the high-temperature stress. As is evident from Table 1, the groups in which the hesperidin or the like was added showed remarkable amelioration of the suppression of the increase in the root length after the high-temperature treatment, compared to the non-addition group. Thus, the hesperidin or the like was found to have an effect that improves the resistance of the plant to the high-temperature stress.

[Table 1]

Table 1

| | | Root length (mm) | |
|---|---|---|---|
| | | Normal cultivation | High-temperature treatment |
| No addition | | 17.5 | 9.3 |
| Addition | Hesperidin 0. 1ppm | 25. 1 | 24.0 |
| | Neohesperidin 0.1ppm | 26.5 | 21.5 |
| | α-Monoglucosyl hesperidin 0.1ppm | 23. 7 | 18.7 |
| | Hesperetin 0.1ppm | 23.5 | 18.0 |
| | Tangeretin 0.1ppm | 23.5 | 18.1 |
| | Nobiletin 0.1ppm | 23. 1 | 14.1 |
| | Phloretin 0.1ppm | 21.9 | 14.8 |
| | Hesperidin methylchalcone 0.1ppm | 22.8 | 16. 7 |
| | Neohesperidin dihydrochalcone 0.1ppm | 23.4 | 15.3 |
| | β-Carotene 0. 1ppm | 22.3 | 11. 2 |
| | Capsanthin 0. 1ppm | 20.4 | 10.7 |
| | Astaxanthin 0. 1ppm | 20. 0 | 11. 1 |

<Example 2: High-Temperature Stress Petri Dish Test (Lettuce)>

Purpose: Evaluation of the synergistic effect by blending with neohesperidin Methods:

For seeds, 2% water agar medium (using water as the solvent), which was prepared such that hesperidin (Fujifilm Wako Pure Chemical Corporation; special-grade reagent) and neohesperidin (Fujifilm Wako Pure Chemical Corporation; special-grade reagent) were contained at the predetermined final concentrations shown in Table 2, was filled into square Petri dishes ("model number: D-210-16", manufactured by As One Corporation). Before high-temperature treatment, lettuce (Green Wave, Takii & Co., Ltd.) was sown on 2% water agar medium, and lettuce seedlings on day 2 after the sowing were transplanted to the above-described agar medium to which the hesperidin and/or the like

was/were added. At the time of the transplantation, the tip of the root was marked. Each Petri dish after the transplantation was placed in an incubator ("model number: FLI-2010A", manufactured by EYELA) at an angle of 45° with respect to the bottom surface, and high-temperature treatment was carried out at 42°C for 1.5 hours. Thereafter, culture was similarly performed at 23°C for 2 days, and then the increase in the root length was evaluated in terms of elongation from the tip of the root of each seedling at the time of the transplantation. In addition, for evaluation of the effect of the mixture of hesperidin and neohesperidin in normal cultivation, culture was similarly performed at 23°C without performing the high-temperature treatment, followed by evaluation of the increase in the root length. In order to confirm the synergistic effect by the application of the mixture of hesperidin and neohesperidin, the root length expected for the mixture application was determined using the Colby's equation (Colby, S. R. "Calculating synergistic and antagonistic responses of herbicide combinations", Weeds, 15, pp. 20-22, 1967), and the calculated root length was compared with the actually measured root length. The Colby's equation is as follows.

$$\text{Colby's equation: } E = (x + y) - (x \cdot y)/100$$

E: Expected root length
x: Root length in the case of application of hesperidin alone
y: Root length in the case of application of neohesperidin alone

For each group, 15 measurement results were obtained (N=15). The results are shown in Table 2.

In the present test, the root length in the case of normal cultivation was 17.1 mm in average, and the root length in the case of cultivation under high-temperature treatment conditions (non-addition group) was 4.4 mm in average. Thus, the decrease rate was 74%, and hence the plants were judged to have been affected by the high-temperature stress. As is evident from Table 2, the groups in which hesperidin and/or neohesperidin was/were added showed remarkable amelioration of the suppression of the increase in the root length after the high-temperature treatment, compared to the non-addition group. The root length expected in the case of addition of the mixture of 0.1 ppm hesperidin and 0.03 ppm neohesperidin was 15.3 mm based on calculation according to the Colby's equation. Since the actually measured value was 18.1 mm, the addition of the mixture was found to have a synergistically improved effect. Similarly, the root length expected in the case of addition of the mixture of 0.1 ppm each of hesperidin and neohesperidin was 18.6 mm. Since the actually measured value was 19.9 mm, the addition of the mixture was found to have a synergistically improved effect. Thus, the hesperidin and the like were found to have a high effect that improves the resistance of the plant to the high-temperature stress. It was also found that the mixtures of hesperidin and neohesperidin have a higher and synergistic effect (the addition groups indicated in bold letters) on improvement of the resistance of the plant to the high-temperature stress compared to the cases of their individual addition.

[Table 2]

Table 2

| | | Root length (mm) | |
|---|---|---|---|
| | | Normal cultivation | High-temperature treatment |
| No addition | | 17. 1 | 4.4 |
| Addition | Hesperidin 0. 1ppm | 19.2 | 10.9 |
| | Neohesperidin 0. 03ppm | 17.6 | 4. 9 |
| | Neohesperidin 0. 1ppm | 18. 1 | 6.4 |
| | Hesperidin 0.1ppm + Neohesperidin 0. 03ppm | 20.2 | **18.1** |
| | Hesperidin 0.1ppm + Neohesperidin 0. 1ppm | 21.0 | **19.9** |

<Example 3: High-Temperature Stress Petri Dish Test (Lettuce)>

Purpose: Evaluation of the synergistic effect by blending with β-carotene, which is a natural product contained in citruses
Methods:

For seeds, 2% water agar medium (using water as the solvent), which was prepared such that hesperidin (Fujifilm Wako Pure Chemical Corporation; special-grade reagent) and neohesperidin (Fujifilm Wako Pure Chemical Corporation; special-grade reagent) were contained at the predetermined final concentrations shown in Table 3, was

filled into square Petri dishes ("model number: D-210-16", manufactured by As One Corporation). Before high-temperature treatment, lettuce (Green Wave, Takii & Co., Ltd.) was sown on 2% water agar medium, and lettuce seedlings on day 2 after the sowing were transplanted to the above-described agar medium to which the hesperidin and/or the like was/were added. At the time of the transplantation, the tip of the root was marked. The Petri dish after the transplantation was placed in an incubator ("model number: FLI-2010A", manufactured by EYELA) at an angle of 45° with respect to the bottom surface, and high-temperature treatment was carried out at 42°C for 1.5 hours. Thereafter, culture was similarly performed at 23°C for 2 days, and then the increase in the root length was evaluated in terms of elongation from the tip of the root of each seedling at the time of the transplantation. For each group, 15 measurement results were obtained (N=15). The results are shown in Table 3.

In the present test, the root length in the case of normal cultivation was 20.8 mm in average, and the root length in the case of cultivation under high-temperature treatment conditions (non-addition group) was 6.2 mm in average. Thus, the decrease rate was 70%, and hence the plants were judged to have been affected by the high-temperature stress. As is evident from Table 3, the groups in which hesperidin or neohesperidin was added showed remarkable amelioration of the suppression of the increase in the root length after the high-temperature treatment, compared to the non-addition group. Thus, the hesperidin and the like were found to have a high effect that improves the resistance of the plant to the high-temperature stress. On the other hand, in the case of addition of the mixture of hesperidin and β-carotene, the increase rate decreased compared to the cases where they were individually added. The mixture of 0.1 ppm each of hesperidin, and β-carotene, which is contained in citruses and assumed to be also contained in their peel extracts, led to a decrease in the high-temperature stress resistance of the plant compared to the cases where they were individually applied. Thus, their effects were found to be antagonistic to each other depending on their concentrations.

[Table 3]

Table 3

| | | Root length (mm) | |
|---|---|---|---|
| | | Normal cultivation | High-temperature treatment |
| No addition | | 20.8 | 6. 2 |
| Addition | Hesperidin 0. 1ppm | 22.2 | 15.0 |
| | β-Carotene 0. 1ppm | 23.8 | 7. 5 |
| | Hesperidin 0.1ppm + β-Carotene 0. 1ppm | 23.4 | 7. 7 |

<Example 4: High-Temperature Stress Petri Dish Test (Lettuce)>

Purpose: Comparison with flavonoids in terms of the effect Methods:

For seeds, 2% water agar medium (using water as the solvent), which was prepared such that hesperidin (Fujifilm Wako Pure Chemical Corporation; special-grade reagent) or the like was contained at a final concentration of 0.1 ppm as shown in Table 4, was filled into square Petri dishes ("model number: D-210-16", manufactured by As One Corporation). Before high-temperature treatment, lettuce (Green Wave, Takii & Co., Ltd.) was sown on 2% water agar medium, and lettuce seedlings on day 2 after the sowing were transplanted to the above-described agar medium to which the hesperidin or the like was added. At the time of the transplantation, the tip of the root was marked. Each Petri dish after the transplantation was placed in an incubator ("model number: FLI-2010A", manufactured by EYELA) at an angle of 45° with respect to the bottom surface, and high-temperature treatment was carried out at 42°C for 1.5 hours. Thereafter, culture was similarly performed at 23°C for 2 days, and then the increase in the root length was evaluated in terms of elongation from the tip of the root of each seedling at the time of the transplantation. For each group, 15 measurement results were obtained (N=15). The results are shown in Table 4.

In the present test, the root length in the case of normal cultivation was 21.7 mm in average, and the root length in the case of cultivation under high-temperature treatment conditions (non-addition group) was 6.7 mm in average. Thus, the decrease rate was 69%, and hence the plants were judged to have been affected by the high-temperature stress. As is evident from Table 4, the group in which hesperidin was added showed remarkable amelioration of the suppression of the increase in the root length after the high-temperature treatment, compared to the non-addition group. Thus, the hesperidin or the like was found to have a high effect that improves the resistance of the plant to the high-temperature stress.

[Table 4]

Table 4

| | | Root length (mm) | |
|---|---|---|---|
| | | Normal cultivation | High-temperature treatment |
| No addition | | 21. 7 | 6. 7 |
| Addition | Hesperidin 0. 1ppm | 23. 1 | 16.5 |
| | Daidzein 0. 1ppm | 26. 6 | 7. 5 |
| | Genistein 0. 1ppm | 25. 8 | 7. 4 |
| | Naringenin 0. 1ppm | 22. 1 | 8.4 |

<Example 5: High-Temperature Stress Petri Dish Test (Rice)>

Purpose: Evaluation of the effect to improve the resistance of rice seeds to a high-temperature stress Methods:

Rice (Koshihikari) seeds were soaked in hot water at 65°C for 10 minutes to perform high-temperature treatment. Thereafter, the seeds were cooled with tap water, and then dried in air, followed by soaking, at room temperature (20 to 25°C) for 1 hour, in a dilution of hesperidin (Fujifilm Wako Pure Chemical Corporation; special-grade reagent) prepared at a final concentration of 1 to 100 ppm (using water as the solvent). A group similarly soaked in distilled water was provided as a non-addition group. After the soaking treatment, the seeds were dried in air, and then 20 seeds were sown on each of shallow Petri dishes in which qualitative filter paper was placed. To the filter paper in each Petri dish, 5 mL of distilled water was uniformly added dropwise. Each Petri dish after the sowing was placed in an incubator ("model number: FLI-2010A", manufactured by EYELA), and culture was performed at 28°C for 5 days, followed by evaluation of the germination rate. For each group, three measurement results were obtained (N=3).

The results are shown in Table 5. In the present test, the germination rate in the case of normal cultivation was 90.2% in average, and the germination rate in the case of cultivation under the high-temperature treatment conditions (non-addition group) was 58.8% in average. Thus, the decrease rate was 35%, and hence the plants were judged to have been affected by the high-temperature stress. As is evident from Table 5, after the high-temperature treatment, the groups in which the seeds were soaked in hesperidin showed germination rates equivalent to the germination rate in the cases of normal sowing (without soaking in hot water). Moreover, remarkable amelioration of the decrease in the germination rate was found compared to the control agent. Thus, hesperidin was found to have a high effect that improves the resistance of the plant to the high-temperature stress. [Table 5]

Table 5

| Rice | | In normal sowing | Non-addition group | Hesperidin | | | β-Carotene | | |
|---|---|---|---|---|---|---|---|---|---|
| | | | | 100ppm | 10ppm | 1ppm | 100ppm | 10ppm | 1ppm |
| Germination rate (%) | Average (%) | 90. 2 | 58. 8 | 78. 8 | 86. 2 | 77. 3 | 61. 0 | 78. 8 | 69. 9 |
| | Standard error | 1.0 | 2. 1 | 1. 5 | 1.8 | 2. 8 | 2. 1 | 1.8 | 3.9 |
| | Increase rate (%) | -- | 100.0 | 134. 0 | 146. 6 | 131. 5 | 103. 7 | 134.0 | 118.9 |

<Example 6: High-Temperature Stress Petri Dish Test (Cabbage)>

Purpose: Evaluation of the effect to improve the high-temperature resistance of cabbage seeds Methods:

Cabbage (Okina, Takii & Co., Ltd.) seeds were soaked in hot water at 52°C for 25 minutes to perform high-temperature treatment. Thereafter, the seeds were cooled with tap water, and then dried in air, followed by soaking, at room temperature (20 to 25°C) for 1 hour, in a dilution of hesperidin (Fujifilm Wako Pure Chemical Corporation; special-grade reagent) prepared at a final concentration of 100 to 1000 ppm (using water as the solvent). A group similarly soaked in distilled water was provided as a non-addition group. After the soaking treatment, the seeds were dried in air,

and then 20 seeds were sown on each of shallow Petri dishes in which qualitative filter paper was placed. To the filter paper in each Petri dish, 3 mL of distilled water was uniformly added dropwise. Each Petri dish after the sowing was placed in an incubator ("model number: FLI-2010A", manufactured by EYELA), and culture was performed at 23°C for 4 days, followed by evaluation of the germination rate and the root lengths of randomly selected seedlings. For each group, three measurement results were obtained for the germination rate (N=3), and 15 measurement results were obtained for the root length (N=15).

The results are shown in Table 6. In the present test, the germination rate in the case of normal cultivation was 93.3% in average, and the germination rate in the case of cultivation under the high-temperature treatment conditions (non-addition group) was 52.1% in average, resulting in a decrease rate of 44%. Similarly, the root lengths in these cases were 53.8 mm in average and 23.0 mm in average, respectively, resulting in a decrease rate of 57%. Thus, the plants were judged to have been affected by the high-temperature stress. As is evident from Table 6, the groups soaked in hesperidin showed remarkable amelioration of the decrease in the germination rate after the high-temperature treatment, compared to the non-addition group. Furthermore, the groups soaked in hesperidin also showed root lengths almost equivalent to the root length in the normal case (without soaking in hot water), indicating remarkable amelioration of the suppression of the increase in the root length compared to the non-addition group. Thus, hesperidin was found to have a high effect that improves the resistance of the plant to the high-temperature stress. [Table 6]

Table 6

| Cabbage | | In normal sowing | Non-addition group | Hesperidin | |
|---|---|---|---|---|---|
| | | | | 1000ppm | 100ppm |
| Germination rate | Average (%) | 93. 3 | 52. 1 | 78. 3 | 66. 2 |
| | Standard error | 1.9 | 2. 1 | 2. 3 | 1.8 |
| | Increase rate (%) | - | 100.0 | 150. 3 | 127. 1 |
| Root length | Average (mm) | 53. 8 | 23. 0 | 51. 6 | 43. 6 |
| | Standard error | 1. 2 | 2. 1 | 1. 9 | 1. 4 |
| | Increase rate (%) | - | 100.0 | 224. 6 | 189. 7 |

<Example 7: High-Temperature Stress Petri Dish Test (Carrot)>

Purpose: Evaluation of the effect to improve the high-temperature resistance of carrot seeds Methods:

Carrot (US Harumakigosun carrot, The Yokohama Nursery Co., Ltd.) seeds were soaked in hot water at 55°C for 20 minutes to perform high-temperature treatment. Thereafter, the seeds were cooled with tap water, and then dried in air, followed by soaking, at room temperature (20 to 25°C) for 1 hour, in a dilution of hesperidin (Fujifilm Wako Pure Chemical Corporation; special-grade reagent) prepared at a final concentration of 100 to 1000 ppm (using water as the solvent). A group similarly soaked in distilled water was provided as a non-addition group. After the soaking treatment, the seeds were dried in air, and then 20 seeds were sown on each of shallow Petri dishes in which qualitative filter paper was placed. To the filter paper in each Petri dish, 3 mL of distilled water was uniformly added dropwise. Each Petri dish after the sowing was placed in an incubator ("model number: FLI-2010A", manufactured by EYELA), and culture was performed at 23°C for 7 days, followed by evaluation of the germination rate. For each group, three measurement results were obtained (N=3).

The results are shown in Table 7. In the present test, the germination rate in the case of normal cultivation was 75.0% in average, and the germination rate in the case of cultivation under the high-temperature treatment conditions (non-addition group) was 31.7% in average. Thus, the decrease rate was 58%, and hence the plants were judged to have been affected by the high-temperature stress. As is evident from Table 7, the groups soaked in hesperidin showed remarkable amelioration of the decrease in the germination rate after the high-temperature treatment, compared to the non-addition group. Thus, hesperidin was found to have a high effect that improves the resistance of the plant to the high-temperature stress.

[Table 7]

Table 7

| Carrot | | In normal sowing | Non-addition group | Hesperidin | |
|---|---|---|---|---|---|
| | | | | 1000ppm | 100ppm |
| Germination rate | Average (%) | 75. 0 | 31. 7 | 55. 0 | 68. 3 |
| | Standard error | 5. 0 | 4.4 | 2. 9 | 4.4 |
| | Increase rate (%) | - | 100. 0 | 173. 7 | 215. 8 |

<Example 8: High-Temperature Stress Pot Test (Lawn Grass)>

Purpose: Evaluation of the effect to improve the high-temperature resistance of bent grass Methods:

Bent grass (Penncross, Snow Brand Seed Co., Ltd.) was uniformly sown on pots filled with seedling culture soil (manufactured by Katakura & Co-op Agri Corporation; Kumiai seedling culture soil for gardening Genkikun No. 1) (soil volume, 100 ml), and cultivated for 14 to 20 days, followed by evenly cutting the above-ground part to a length of about 1 cm on the day before application of hesperidin. For each pot, drenching treatment was carried out with 10 ml of a dilution of hesperidin (Fujifilm Wako Pure Chemical Corporation; special-grade reagent) whose final concentration was adjusted to 0.06 to 0.6 ppm. A non-addition group was similarly subjected to drenching treatment using distilled water. High-temperature treatment was carried out by cultivation in a glass greenhouse (average daytime temperature, 50°C) for 7 days, and then the fresh weight of the above-ground part was evaluated. For each group, three measurement results were obtained (N=3).

The results are shown in Table 8. In the present test, the fresh weight of the above-ground part in the case of normal cultivation was 3.7 g in average, and the fresh weight of the above-ground part in the case of cultivation under the high-temperature treatment conditions (non-addition group) was 2.2 g in average. Thus, the decrease rate was 41%, and hence the plants were judged to have been affected by the high-temperature stress. As is evident from Table 8, the groups subjected to the drenching treatment with hesperidin showed remarkable amelioration of the decrease in the fresh weight of the above-ground part after the high-temperature treatment, compared to the non-addition group. Further, as is evident from Fig. 1, no death was found for the above-ground part in the groups subjected to the drenching treatment with hesperidin. Thus, hesperidin was found to have a high effect that improves the resistance of the plant to the high-temperature stress.

[Table 8]

Table 8

| Bent grass | | Non—addition group | Hesperidin | |
|---|---|---|---|---|
| | | | 0. 6ppm | 0. 06ppm |
| Weight of above-ground part | Average (g) | 2. 2 | 3. 6 | 3. 3 |
| | Standard error | 0. 2 | 0. 1 | 0. 1 |
| | Increase rate (%) | 100.0 | 162. 2 | 151. 7 |

<Example 9: High-Temperature Stress Pot Test (Lettuce)>

Purpose: Evaluation of the effect to improve the high-temperature resistance of lettuce Methods:

Lettuce (Green Wave, Takii & Co., Ltd.) was sown on a cell tray filled with seedling culture soil (manufactured by Nihon Hiryo Co., Ltd.; "Naebijin N100"). Immediately after the sowing, drenching treatment was carried out with 5 ml/well of a dilution of hesperidin prepared at a final concentration of 100 to 1000 ppm (using water as the solvent). A non-addition group was similarly subjected to drenching treatment using distilled water. High-temperature treatment was carried out by cultivation for 20 days in a greenhouse where the average daytime temperature was 35°C, and then the fresh weight of the above-ground part and the fresh weight of the underground part were evaluated. For each group, 15 to 20 measurement results were obtained (N=15 to 20).

The results are shown in Table 9. In the present test, the fresh weight of the above-ground part in the case of normal cultivation was 0.82 g in average, and the fresh weight of the above-ground part in the case of cultivation under the high-temperature treatment conditions (non-addition group) was 0.66 g in average, resulting in a decrease rate of

20%. Similarly, the fresh weights of the underground part in these cases were 0.33 g in average and 0.24 g in average, respectively, resulting in a decrease rate of 27%. Thus, the plants were judged to have been affected by the high-temperature stress. As is evident from Table 9, the groups subjected to the drenching treatment with hesperidin showed remarkable amelioration of the decrease in the fresh weight of the above-ground part and the fresh weight of the underground part after the high-temperature treatment, compared to the non-addition group. Thus, hesperidin was found to have a high effect that improves the resistance of the plant to the high-temperature stress.

[Table 9]

Table 9

| Lettuce | | Non-addition group | Hesperidin | |
|---|---|---|---|---|
| | | | 1000ppm | 100ppm |
| Fresh weight of above-ground part | Average (g) | 0. 66 | 0. 72 | 0. 76 |
| | Standard error | 0.01 | 0. 03 | 0. 03 |
| | Increase rate (%) | 100.0 | 109. 1 | 114.4 |
| Fresh weight of Underground part | Average (g) | 0. 24 | 0.22 | 0. 29 |
| | Standard error | 0.01 | 0.01 | 0.01 |
| | Increase rate (%) | 100.0 | 93. 9 | 122. 8 |

<Example 10: High-Temperature Stress Pot Test (Cabbage)>

Purpose: Evaluation of the effect to improve the high-temperature resistance of cabbage Methods:

Cabbage (Okina, Takii & Co., Ltd.) was sown on a cell tray filled with seedling culture soil (manufactured by Nihon Hiryo Co., Ltd.; "Naebijin N100"). Immediately after the sowing, drenching treatment was carried out with 5 ml/well of a dilution of hesperidin (Fujifilm Wako Pure Chemical Corporation; special-grade reagent) prepared at a final concentration of 100 to 1000 ppm (using water as the solvent). Cultivation was carried out in a greenhouse (average daytime temperature, 35°C) for 30 days, and then the fresh weight of the above-ground part and the fresh weight of the underground part were evaluated. For each group, 15 to 20 measurement results were obtained (N=15 to 20).

The results are shown in Table 10. In the present test, the fresh weight of the above-ground part in the case of normal cultivation was 0.91 g in average, and the fresh weight of the above-ground part in the case of cultivation under the high-temperature treatment conditions (non-addition group) was 0.66 g in average, resulting in a decrease rate of 27%. Similarly, the fresh weights of the underground part in these cases were 0.37 g in average and 0.24 g in average, respectively, resulting in a decrease rate of 35%. Thus, the plants were judged to have been affected by the high-temperature stress. As is evident from Table 10, the groups subjected to the drenching treatment with hesperidin showed remarkable amelioration of the decrease in the fresh weight of the above-ground part after the high-temperature treatment, compared to the non-addition group. Thus, hesperidin was found to have a high effect that improves the resistance of the plant to the high-temperature stress.

[Table 10]

Table 10

| Cabbage | | Non-addition group | Hesperidin | |
|---|---|---|---|---|
| | | | 1000ppm | 100ppm |
| Fresh weight of above-ground part | Average (g) | 0. 66 | 0. 72 | 0. 87 |
| | Standard error | 0.01 | 0. 03 | 0. 05 |
| | Increase rate (%) | 100.0 | 97. 1 | 118. 0 |
| Fresh weight of underground part | Average (g) | 0.24 | 0. 25 | 0. 32 |
| | Standard error | 0.01 | 0. 02 | 0. 02 |
| | Increase rate (%) | 100.0 | 103. 2 | 130. 6 |

<Example 11: High-Temperature Stress Field Test (Lawn Grass)>

Purpose: Evaluation of the effect to improve the resistance to a high-temperature stress at the field level (countermeasure for passing summer) Methods:

In a field in Nishinihon Green Research Institute, a wettable powder formulation containing 1% hesperidin having the formulation composition shown in Table 11 was applied a total of three times by foliar spraying at a ratio of 0.25 to 1.25 g/$m^2$ (amount of water sprayed, 250 ml) every other week in July to September. One month after the final spraying, the lawn grass was collected using a hole cutter, and the number of sprouts, the root length, and the dry root weight were measured. For each group, three measurement results were obtained (N=3).

The results are shown in Tables 12 and 13. In the present test, the root length before the spraying was 14.3 cm in average, and the root length in the case of cultivation under the high-temperature treatment conditions (non-addition group) was 9.9 cm in average, resulting in a decrease rate of 27%. Similarly, the dry weights of the underground part (dry root weight) in these cases were 0.25 g in average and 0.09 g in average, respectively, resulting in a decrease rate of 64%. Thus, the plants were judged to have been affected by the high-temperature stress. As is evident from Tables 12 and 13, the groups subjected to the foliar spraying treatment with hesperidin showed remarkable amelioration of the decreases in the number of sprouts, the root length, and the dry weight of the underground part (dry root weight) after the cultivation at high temperature, compared to the non-addition group. Thus, hesperidin was found to have a high effect that improves the resistance of the plant to the high-temperature stress.

[Table 11]

Table 11

| Component | Content |
|---|---|
| Hesperidin (Fujifilm Wako Pure Chemical Corporation; special-grade reagent) | 1% |
| Newkalgen EX-70 | 2. 25% |
| pH Adjuster | 5% |
| Clay mineral (such as clay) | 91. 75% |

[Table 12]

Table 12

| Agent name | Amount of use (g, ml/$m^2$) | Upper row: root length (cm), Lower row: dry root weight (g) | | | | | |
|---|---|---|---|---|---|---|---|
| | | July 26 (before spraying) | | August 31 (before third spraying) | | September 26 (26 days after third spraying) | |
| | | cm, g/cup | % | cm, g/cup | % | cm, g/cup | % |
| Non-addition group | | 14. 3 | 100 | 11.5 | 100 | 9. 9 | 100 |
| | | 0. 25 | 100 | 0. 15 | 100 | 0. 09 | 100 |
| Wettable powder formulation containing 1% hesperidin | 0.25g (250ml) | 14. 6 | 102 | 14.3 | 124 | 11. 2 | 113 |
| | | 0. 24 | 96 | 0. 17 | 113 | 0. 12 | 133 |
| | 1. 25g (250ml) | 14. 5 | 101 | 11. 6 | 101 | 11. 1 | 112 |
| | | 0. 23 | 92 | 0. 16 | 107 | 0. 12 | 133 |

[Table 13]

Table 13

| Agent name | Amount of use (g, ml/m$^2$) | Number of sprouts (sprout number) | | | | | |
|---|---|---|---|---|---|---|---|
| | | July 26 (before spraying) | | August 31 (before third spraying) | | September 26 (26 days after third spraying) | |
| | | Sprout number /1 cm$^2$ | % | Sprout number /1 cm$^2$ | % | Sprout number /1 cm$^2$ | % |
| Non-addition group | | 11. 8 | 100 | 14.8 | 100 | 14.4 | 100 |
| Wettable powder formulation containing 1% hesperidin | 0. 25g (250ml) | 14. 1 | 119 | 17. 2 | 116 | 16. 6 | 115 |
| | 1. 25g (250ml) | 12. 1 | 103 | 16. 3 | 110 | 16. 7 | 116 |

<Example 12: Low-Temperature Stress Field Test (Lawn Grass)>

Purpose: Evaluation of the effect to improve the low-temperature resistance of lawn grass Methods:

In the research institute, a wettable powder formulation containing 1% hesperidin having the formulation composition shown in Table 11 was applied a total of four times by foliar spraying at a ratio of 0.15 to 0.75 g/m$^2$ (amount of water sprayed, 250 ml) every other week from late October to late December in 2017. Three months after the final spraying, the lawn grass was collected using a hole cutter, and the number of sprouts was measured. For each group, three measurement results were obtained (N=3).

The results are shown in Table 14. In the period from November 2017 to March 2018, the highest temperature was 16.6°C; the lowest temperature was - 3.7°C; and the average temperature was 6.0°C. Since the optimum growth temperature of *Zoysia tenuifolia* (Korean velvet grass) is 24 to 35°C, and it enters a period of dormancy at 10°C or less, the plant was judged to have been affected by the low-temperature stress. As is evident from Table 14, the groups subjected to the foliar spraying treatment with hesperidin showed remarkable amelioration of the decrease in the number of sprouts after the cultivation at low temperature, compared to the non-addition group and the control group to which a fertilizer that does not contain hesperidin was applied. Thus, hesperidin was found to have a high effect that improves the resistance of the plant to the low-temperature stress.

[Table 14]

Table 14

| Zoysia tenuifolia (Korean velvet grass) | | Non-addition group | Hesperidin | | Control group |
|---|---|---|---|---|---|
| | | | 0. 15g/m$^2$ | 0. 75g/m$^2$ | |
| Number of sprouts | Average (number) | 58. 67 | 111. 33 | 112. 00 | 71. 50 |
| | Standard error | 4. 18 | 12. 13 | 8. 66 | 4. 18 |
| | Increase rate (%) | 100. 0 | 189. 8 | 190. 9 | 121. 9 |

<Example 13: Salt Stress Pot Test (Cucumber)>

Purpose: Evaluation of the effect to improve the salt resistance of cucumber Methods:

Cucumber (Hanjirofushinari, Takii & Co., Ltd.) was sown on pots filled with seedling culture soil (manufactured by Katakura & Co-op Agri Corporation; Kumiai seedling culture soil for gardening Genkikun No. 1) (soil volume, 100 ml), and cultivated for 21 days. With a wettable powder formulation containing 1% hesperidin having the formulation composition shown in Table 11, a dilution was prepared such that the final concentration of hesperidin was 1 ppm. For each pot, 10 ml of the dilution was applied by foliar spraying. The cucumber was left to stand in a dilution whose final NaCl concentration was adjusted to 75 mM, and allowed to absorb water from the bottom. Cultivation was carried out in a greenhouse (20 to 25°C) for 7 days, and then the fresh weight of the above-ground part was measured. For each group, six measurement results were obtained (N=6).

The results are shown in Table 15. In the present test, the fresh weight of the above-ground part in the case

of normal cultivation (0 mM NaCl, non-addition group) was 4.2 g, and the fresh weight of the above-ground part in the case of cultivation under the high salt concentration conditions (75 mM NaCl, non-addition group) was 3.1 g. Thus, the decrease rate was 26%, and hence the plants were judged to have been affected by the salt stress. As is evident from Table 15, the group subjected to the foliar spraying treatment with hesperidin showed remarkable amelioration of the decrease in the fresh weight of the above-ground part after the salt stress treatment, compared to the non-addition group. Thus, hesperidin was found to have a high effect that improves the resistance of the plant to the salt stress.

[Table 15]

Table 15

| Foliar spraying | | Fresh weight of above-ground part (g) | |
|---|---|---|---|
| | | Normal cultivation | Salt treatment |
| No addition | | 4.2 | 3. 1 |
| Addition | Hesperidin 1ppm | 4. 2 | 3. 6 |

<Example 14: Growth-Promoting Effect (Dent Corn)>

Purpose: Evaluation of the growth-promoting effect on dent corn Methods:

Dent corn (34V52) was sown on pots filled with seedling culture soil (manufactured by Katakura & Co-op Agri Corporation; Kumiai seedling culture soil for gardening Genkikun No. 1) (soil volume, 130 ml). After confirmation of the germination, drenching treatment was carried out with 5 ml each of dilutions of hesperidin prepared at final concentrations of 1 to 10 ppm (using water as the solvent). Cultivation was carried out in a greenhouse (average daytime temperature, 25°C) for 14 days, and then the dry weight of the above-ground part and the dry weight of the underground part were evaluated.

The results are shown in Table 16. As is evident from Table 16, the hesperidin drenching treatment groups showed remarkable increases in the dry weight of the above-ground part and the dry weight of the underground part. Thus, hesperidin was found to have a high effect that promotes the growth of the plant. In the case of the drenching treatment at the highest concentration, 10 ppm, no remarkable increase in the weight of the above-ground part or the underground part was found compared to the non-addition group.

[Table 16]

| Dent corn | ppm | Weight of above-ground part FW mg/ individual | Weight of underground part FW mg/individual | Increase/ decrease of above-ground part (%) | Increase/decrease of underground part (%) |
|---|---|---|---|---|---|
| Non-addition group | -- | 5. 7 | 4. 1 | 100% | 100% |
| Hesperidin | 10 | 5. 9 | 4. 2 | 104% | 103% |
| | 3 | 6. 3 | 5. 0 | 111% | 123% |
| | 1 | 6. 5 | 5. 1 | 114% | 126% |

<Example 15: Growth-Promoting Effect (Wheat)>

Purpose: Evaluation of the growth-promoting effect on wheat Methods:

Wheat (Satonosora) was sown on pots filled with seedling culture soil (manufactured by Katakura & Co-op Agri Corporation; Kumiai seedling culture soil for gardening Genkikun No. 1) (soil volume, 100 ml). After confirmation of the germination, drenching treatment was carried out with 5 ml each of dilutions of hesperidin prepared at final concentrations of 10 to 33 ppm (using water as the solvent). Cultivation was carried out in a greenhouse (average daytime temperature, 25°C) for 14 days, and then the dry weight of the above-ground part and the dry weight of the underground part were evaluated.

The results are shown in Table 17. As is evident from Table 17, the hesperidin drenching treatment groups showed remarkable increases in the dry weight of the above-ground part and the dry weight of the underground part. Thus, hesperidin was found to have a high effect that promotes the growth of the plant.

[Table 17]

Table 17

| Wheat | ppm | Weight of above-ground part FW mg/individual | Weight of underground part FW mg/individual | Increase/decrease of above-ground part (%) | Increase/decrease of underground part (%) |
|---|---|---|---|---|---|
| Non-addition group | - | 297. 7 | 366. 7 | 100% | 100% |
| Hesperidin | 33 | 345. 4 | 382. 6 | 116% | 104% |
| | 10 | 364. 9 | 391. 6 | 123% | 107% |

<Example 16: Growth-Promoting Effect (Lettuce)>

Purpose: Evaluation of the growth-promoting effect on lettuce (drenching treatment) Methods:

Lettuce (Green Wave) was sown on a cell tray filled with seedling culture soil (manufactured by Nihon Hiryo Co., Ltd.; "Naebijin N100"). After the two leaf stage, the lettuce was transplanted to each pot (soil volume, 100 ml). After confirmation of the germination, drenching treatment was carried out with 5 ml each of dilutions of hesperidin prepared at final concentrations of 1 to 10 ppm (using water as the solvent). Cultivation was carried out in a greenhouse (average daytime temperature, 25°C) for 14 days, and then the dry weight of the above-ground part and the dry weight of the underground part were evaluated.

The results are shown in Table 18. As is evident from Table 18, the hesperidin drenching treatment groups showed remarkable increases in the dry weight of the above-ground part and the dry weight of the underground part. Thus, hesperidin was found to have a high effect that promotes the growth of the plant. As the concentration of the hesperidin added decreased, the weights of the above-ground part and the underground part tended to decrease. In the case of the drenching treatment at the lowest concentration, 1 ppm, no remarkable increase in the above-ground part was found.

[Table 18]

Table 18

| Lettuce (drenching treatment) | ppm | Weight of above-ground part FW mg/individual | Weight of underground part FW mg/individual | Increase/decrease of above-ground part (%) | Increase/decrease of underground part (%) |
|---|---|---|---|---|---|
| Non-addition group | - | 12. 83 | 6. 96 | 100% | 100% |
| Hesperidin | 10 | 15. 12 | 8. 57 | 118% | 123% |
| | 3 | 16. 17 | 8. 29 | 126% | 119% |
| | 1 | 13. 26 | 7. 99 | 103% | 115% |

<Example 17: Growth-Promoting Effect (Lettuce)>

Purpose: Evaluation of the growth-promoting effect on lettuce (seed treatment) Methods:

For lettuce (Green Wave, Takii & Co., Ltd.), seed dressing was carried out by application, at 5% seed weight, of a dilution of hesperidin prepared at a final concentration of 1 to 100 ppm (using water as the solvent). The dressed lettuce seeds were sown on a cell tray filled with seedling culture soil (manufactured by Nihon Hiryo Co., Ltd.; "Naebijin N100"). Cultivation was carried out in a greenhouse (average daytime temperature, 25°C) for 28 days, and then the dry

weight of the above-ground part and the dry weight of the underground part were evaluated.

The results are shown in Table 19. As is evident from Table 19, the hesperidin drenching treatment groups showed remarkable increases in the dry weight of the above-ground part and the dry weight of the underground part. Thus, hesperidin was found to have a high effect that promotes the growth of the plant. As the concentration of the hesperidin added decreased, the weights of the above-ground part and the underground part tended to decrease. In the case of the drenching treatment at the lowest concentration, 1 ppm, no remarkable increase in the above-ground part was found.

[Table 19]

Table 19

| Lettuce (seed treatment) | ppm | Weight of above-ground part FW mg/ individual | Weight of underground part FW mg/individual | Increase/ decrease of above-ground part (%) | Increase/decrease of underground part (%) |
|---|---|---|---|---|---|
| Non-addition group | - | 25. 1 | 5. 7 | 100% | 100% |
| Hesperidin | 100 | 37. 4 | 7. 2 | 149% | 126% |
| | 10 | 28. 3 | 8. 1 | 113% | 142% |
| | 1 | 27. 4 | 7. 6 | 109% | 133% |

<Example 18: Growth-Promoting Effect (Cabbage)>

Purpose: Evaluation of the growth-promoting effect on cabbage Methods:

For cabbage (Okina, Takii & Co., Ltd.), seed dressing was carried out by application, at 5% seed weight, of a dilution of hesperidin prepared at a final concentration of 1 to 100 ppm (using water as the solvent). The dressed cabbage seeds were sown on a cell tray filled with seedling culture soil (manufactured by Nihon Hiryo Co., Ltd.; "Naebijin N100"). Cultivation was carried out in a greenhouse (average daytime temperature, 25°C) for 28 days, and then the dry weight of the above-ground part and the dry weight of the underground part were evaluated.

The results are shown in Table 20. As is evident from Table 20, the hesperidin drenching treatment groups showed remarkable increases in the dry weight of the above-ground part and the dry weight of the underground part. Thus, hesperidin was found to have a high effect that promotes the growth of the plant. In the case of the drenching treatment at the highest concentration, 100 ppm, no remarkable increase in the weight of the above-ground part or the underground part was found compared to the non-addition group. Thus, the optimum concentration of hesperidin to be added for cabbage was judged to be lower than 100 ppm.

[Table 20]

Table 20

| Cabbage | ppm | Weight of above-ground part FW mg/ individual | Weight of underground part FW mg/individual | Increase/ decrease of above-ground part (%) | Increase/decrease of underground part (%) |
|---|---|---|---|---|---|
| Non-addition group | - | 50. 9 | 14. 5 | 100% | 100% |
| Hesperidin | 100 | 53. 9 | 14. 6 | 106% | 101% |
| | 10 | 57. 2 | 15. 3 | 112% | 106% |
| | 1 | 54. 0 | 15. 6 | 106% | 108% |

<Example 19: Antimicrobial Action (*Pythium*)>

Purpose: Evaluation of the control effect against rice seedling blight (*Pythium graminicora*) Methods:

*Pythium graminicora* (after culturing in a bent grass seed medium for 7 to 10 days) were mixed well with culture soil at a ratio of 0.2% soil weight, and the resulting mixture was filled into each pot (soil volume, 80 ml). Rice seeds (Koshihikari) were sown on the pot, and drenching treatment was carried out with 10 ml each of 10- to 100-fold dilutions (using water as the solvent) of a wettable powder formulation containing 1% hesperidin having the formulation composition shown in Table 11, followed by covering the seeds with the soil. After carrying out germination hastening treatment in an incubator ("model number: FLI-2010A", manufactured by EYELA) at 28°C for 3 days, the plants were left to stand at 4°C for 3 days, followed by cultivation at 30°C for 3 days. Thereafter, the pot was placed in a greenhouse, and cultivation was carried out for 7 days, followed by evaluation of the control effect. The disease severity level was evaluated according to the following standard.

(Disease severity level standard)

0 ... Healthy seedlings
1 ... Slight suppression of the growth of the above-ground part/underground part
2 ... Suppression of the growth of the above-ground part/underground part
3 ... Remarkable suppression of the growth of the above-ground part/underground part
4 ... Death

The results are shown in Table 21. As is evident from Table 21, the groups subjected to the drenching treatment with hesperidin showed suppression of the ratio of diseased seedlings and the disease severity, compared to the non-addition group. Thus, hesperidin was found to have a control effect against rice
[Table 21]

Table 21

| | Dilution factor | Number of seedlings investigated | Disease severity level | | | | | Ratio of diseased seedlings | Disease severity | Preventive value |
|---|---|---|---|---|---|---|---|---|---|---|
| | | | 0 | 1 | 2 | 3 | 4 | | | |
| Non-addition group | x1 | 82 | 0 | 0 | 26 | 33 | 23 | 100% | 74. 1 | 0. 0 |
| Wettable powder formulation containing 1 % hesperidin | x10 | 74 | 37 | 4 | 18 | 13 | 2 | 50% | 29. 4 | 60. 3 |
| | x30 | 87 | 5 | 2 | 26 | 43 | 11 | 94% | 65. 2 | 12. 0 |
| | x100 | 85 | 10 | 1 | 26 | 42 | 6 | 88% | 59. 7 | 19. 4 |

<Example 20: Antimicrobial Action (Powdery Mildew)>

Purpose: Evaluation of the control effect against cucumber powdery mildew (*Sphaerotheca cucurbitae)* Methods:

Three or more leaves were cut from cucumber (Hanjirofushinari, Takii & Co., Ltd.) in the two leaf stage, and foliar spraying of 15 ml each of dilutions of hesperidin prepared at final concentrations of 10 to 1000 ppm (using 0.01% Tween 20 solution as the solvent) was carried out. After air-drying, foliar spraying of cucumber powdery mildew spores ($1\times10^4$ spores/ml, using 0.01% Tween 20 solution as the solvent) was carried out. After air-drying, cultivation was carried out in a greenhouse for 14 days, and then the control effect was evaluated.
The results are shown in Table 22. As is evident from Table 22, the groups subjected to the drenching treatment with hesperidin showed a preventive value of 68 as calculated according to the following equation 3.

(Equation 3)

$$\text{Preventive value} = 100 - (\text{damage in the addition group}/\text{damage in the non-addition group}) \times 100$$

Thus, hesperidin was found to have a control effect against cucumber powdery mildew.

[Table 22]

Table 22

| Amount of hesperidin added (ppm) | Preventive value |
|---|---|
| 1,000 | 68. 0 |
| 100 | 50. 0 |
| 10 | 5. 0 |

<Example 21: Antimicrobial Action (Tomato Late Blight)>

Purpose: Evaluation of the control effect against tomato late blight (*Phythophthora infestans*) Methods:

Seven or more leaves were cut from tomato (Regina) in the seven or eight leaf stage, and foliar spraying of 10 ml each of dilutions of hesperidin prepared at final concentrations of 10 to 100 ppm (using water as the solvent) was carried out. After air-drying, foliar spraying of tomato late blight zoospores ($1\times10^4$ zoospores/ml) was carried out. After air-drying, cultivation was carried out in a greenhouse for 14 days, and then the control effect was evaluated.

The results are shown in Table 23. As is evident from Table 23, the groups subjected to the drenching treatment with hesperidin showed a preventive value of 92 as calculated according to the equation 3 above. Thus, hesperidin was found to have a control effect against tomato late blight.

[Table 23]

Table 23

| Amount of hesperidin added (ppm) | Preventive value |
|---|---|
| 100 | 92. 1 |
| 30 | 86.0 |
| 10 | 37.4 |

<Example 22: pH Stress Petri Dish Test (Lettuce)>

Purpose: Evaluation of the effect to improve the pH stress resistance of lettuce Methods:

Into square Petri dishes ("model number: D-210-16", manufactured by As One Corporation), 2% water agar medium (pH 4, 7, or 9) prepared such that the final concentration of hesperidin was 0, 0.1 ppm, or 1 ppm was filled. Lettuce seeds (Green Wave, Takii & Co., Ltd.) were sown on 2% water agar medium (pH 7), and lettuce seedlings on day 2 after the sowing were transplanted to the agar medium (pH 4, 7, or 9) to which hesperidin was added at each concentration described above. At the time of the transplantation, the tip of the root was marked. Each Petri dish after the transplantation was placed in an incubator ("model number: FLI-2010A", manufactured by EYELA) at an angle of 45° with respect to the bottom surface, and culture was carried out at 23°C for 2 days. Thereafter, the increase in the root length was evaluated in terms of elongation from the tip of the root of each seedling at the time of the transplantation. For each group, 15 measurement results were obtained (N=15). The results are shown in Table 24.

In the present test, the root length in the case of normal cultivation (pH 7) was 19.37 mm in average; the root length in the case of cultivation under the culture conditions at pH 4 (non-addition group) was 14.51 mm in average; and the root length in the case of cultivation under the culture conditions at pH 9 (non-addition group) was 15.38 mm in average. Thus, the decrease rates were 25% and 21%, respectively, and hence the plants were judged to have been affected by the acid or alkali stress. As is evident from Table 24, the groups in which hesperidin was added showed

remarkable amelioration of the suppression of the increase in the root length after the culture under the acidic or alkaline conditions, compared to the non-addition group. Thus, hesperidin was found to have a high effect that improves the resistance of the plant to the pH stress.

[Table 24]

| Acid stress (pH 4) | | | | | |
|---|---|---|---|---|---|
| Lettuce | | In normal cultivation | Non-addition group | Hesperidin | |
| | | | | 0.1ppm | 1ppm |
| Root length | Average (mm) | 19.37 | 14.51 | 17.69 | 18.03 |
| | Standard error | 0.38 | 0.48 | 0.20 | 0.23 |
| | Increase rate (%) | - | 100.0 | 121. 9 | 124.3 |

| Alkali stress (pH 9) | | | | | |
|---|---|---|---|---|---|
| Lettuce | | In normal cultivation | Non-addition group | Hesperidin | |
| | | | | 0.1ppm | 1ppm |
| Root length | Average (mm) | 19.37 | 15.38 | 17.55 | 17.40 |
| | Standard error | 0.38 | 0.43 | 0.29 | 0.34 |
| | Increase rate (%) | - | 100.0 | 114.1 | 113. 1 |

<Example 23: Metal Stress Petri Dish Test (Lettuce)>

Purpose: Evaluation of the effect to improve the metal stress resistance of lettuce Methods:

Into square Petri dishes ("model number: D-210-16", manufactured by As One Corporation), 2% water agar medium (100 μM $AlCl_3$ (Fujifilm Wako Pure Chemical Corporation; special-grade reagent)) prepared such that the final concentration of hesperidin was 0 or 1 ppm was filled. Lettuce seeds (Green Wave, Takii & Co., Ltd.) were sown on 2% water agar medium, and lettuce seedlings on day 2 after the sowing were transplanted to the above-described agar medium containing $AlCl_3$. At the time of the transplantation, the tip of the root was marked. Each Petri dish after the transplantation was placed in an incubator ("model number: FLI-2010A", manufactured by EYELA) at an angle of 45° with respect to the bottom surface, and culture was carried out at 23°C for 2 days. Thereafter, the increase in the root length was evaluated in terms of elongation from the tip of the root of each seedling at the time of the transplantation. For each group, 15 measurement results were obtained (N=15). The results are shown in Table 25.

In the present test, the root length in the case of normal cultivation was 26.94 mm in average, and the root length in the case of cultivation under the $AlCl_3$ conditions (non-addition group) was 16.62 mm in average. Thus, the decrease rate was 38%, and hence the plants were judged to have been affected by the metal stress. As is evident from Table 25, the group in which hesperidin was added showed remarkable amelioration of the suppression of the increase in the root length after the culture in the presence of the metal, compared to the non-addition group. Thus, hesperidin was found to have a high effect that improves the resistance of the plant to the metal stress.

[Table 25]

| Metal stress ($AlCl_3$ 100μM) | | | | |
|---|---|---|---|---|
| Lettuce | | In normal cultivation | Non-addition group | Hesperidin |
| | | | | 1ppm |
| Root length | Average (mm) | 26. 94 | 16.62 | 22.87 |
| | Standard error | 0. 94 | 0.72 | 0. 60 |
| | Increase rate (%) | - | 100.0 | 137.6 |

<Example 24: Dry Stress Petri Dish Test (Tomato)>

Purpose: Evaluation of the effect to improve the dry stress resistance of tomato Methods:

In each of shallow Petri dishes in which qualitative filter paper was placed, six seeds of tomato (Momotaro Home, Takii & Co., Ltd.) were sown, and 4 mL of a dilution of hesperidin (Fujifilm Wako Pure Chemical Corporation; special-grade reagent) prepared at a final concentration of 0, 0.1 ppm, or 1 ppm (containing polyethylene glycol 6000 (Fujifilm Wako Pure Chemical Corporation; first-grade reagent)) was uniformly added dropwise to the filter paper in each Petri dish. Each Petri dish after the sowing was placed in an incubator ("model number: FLI-2010A", manufactured by EYELA), and culture was performed at 28°C for 12 days, followed by evaluation of the root length. For each group, three measurement results were obtained (N=3).

The results are shown in Table 26. In the present test, the root length in the case of normal cultivation was 53.14 mm in average, and the root length in the case of cultivation under the pseudo-dry conditions using polyethylene glycol (non-addition group) was 23.29 mm in average. Thus, the decrease rate was 56%, and hence the plants were judged to have been affected by the dry stress. As is evident from Table 26, after the drying treatment, the groups in which hesperidin was added showed root lengths equivalent to the root length in the case of normal sowing (without polyethylene glycol). Furthermore, remarkable amelioration of the suppression of the increase in the root length was found compared to the non-addition group. Thus, hesperidin was found to have a high effect that improves the resistance of the plant to the dry stress.

[Table 26]

| Dry stress (20 g/L polyethylene glycol) | | | | | |
|---|---|---|---|---|---|
| Tomato | | In normal cultivation | Non-addition group | Hesperidin | |
| | | | | 0.1ppm | 1ppm |
| Root length | Average (mm) | 53.14 | 23.29 | 49.89 | 55.81 |
| | Standard error | 3.88 | 2.42 | 3.11 | 1.34 |
| | Increase rate (%) | - | 100.0 | 214.2 | 239. 6 |

## Claims

1. A plant growth regulating agent for improving environmental stress resistance of a plant, the plant growth regulating agent comprising hesperidin or a hesperidin derivative, or a flavonoid, as an effective component.

2. The plant growth regulating agent according to claim 1, wherein the environmental stress is at least one stress selected from the group consisting of high temperature, low temperature, osmotic pressure, drought, heavy rainfall, pH, ultraviolet, and high salt.

3. The plant growth regulating agent according to claim 1 or 2, wherein the plant is at least one plant selected from the group consisting of plants belonging to the family Solanaceae, plants belonging to the family Apiaceae, plants belonging to the family Chenopodiaceae, plants belonging to the family Compositae, plants belonging to the family Leguminosae, plants belonging to the family Liliaceae, plants belonging to the family Rosaceae, plants belonging to the family Cucurbitaceae, plants belonging to the family Convolvulaceae, plants belonging to the family Theaceae, plants belonging to the family Cupressaceae, plants belonging to the family Myrtaceae, plants belonging to the family Oleaceae, plants belonging to the family Rutaceae, plants belonging to the family Vitaceae, plants belonging to the family Lamiaceae, plants belonging to the family Poaceae, plants belonging to the family Cruciferae, plants belonging to the family Musaceae, plants belonging to the family Anacardiaceae, and plants belonging to the family Caricaceae.

4. The plant growth regulating agent according to any one of claims 1 to 3, wherein the hesperidin derivative is at least one hesperidin derivative selected from the group consisting of $\alpha$-monoglucosyl hesperidin, hesperidin methylchalcone, neohesperidin, and neohesperidin dihydrochalcone.

5. The plant growth regulating agent according to any one of claims 1 to 4, wherein the flavonoid is at least one flavonoid selected from the group consisting of hesperetin, tangeretin, nobiletin, and phloretin.

6. The plant growth regulating agent according to any one of claims 1 to 5, wherein the flavonoid is at least one flavonoid selected from the group consisting of tangeretin, nobiletin, and phloretin.

7. The plant growth regulating agent according to any one of claims 1 to 6, comprising hesperidin as an effective component.

8. The plant growth regulating agent according to any one of claims 1 to 7, comprising hesperidin and neohesperidin as effective components.

9. A method of improving environmental stress resistance of a plant, the method comprising the step of applying the plant growth regulating agent according to any one of claims 1 to 8 to a plant.

10. The method according to claim 9, wherein the application is application to a soil, a medium, or a plant body.

11. The method according to claim 9 or 10, wherein the application is at least one application selected from the group consisting of soil incorporation, drenching, seed dressing, seed soaking, and foliar spraying.

12. A plant growth regulating agent for growth promotion of a plant, the plant growth regulating agent comprising hesperidin or a hesperidin derivative, or a flavonoid, as an effective component.

13. The plant growth regulating agent according to claim 12, comprising hesperidin as an effective component.

14. A plant growth regulating agent for antimicrobial purpose in a plant, the plant growth regulating agent comprising hesperidin or a hesperidin derivative, or a flavonoid, as an effective component.

15. The plant growth regulating agent according to claim 14, comprising hesperidin as an effective component.

16. Use of hesperidin or a hesperidin derivative, or a flavonoid in the manufacture of an environmental stress resistance improving agent for a plant.

17. Use of hesperidin or a hesperidin derivative, or a flavonoid, for improving environmental stress resistance of a plant.

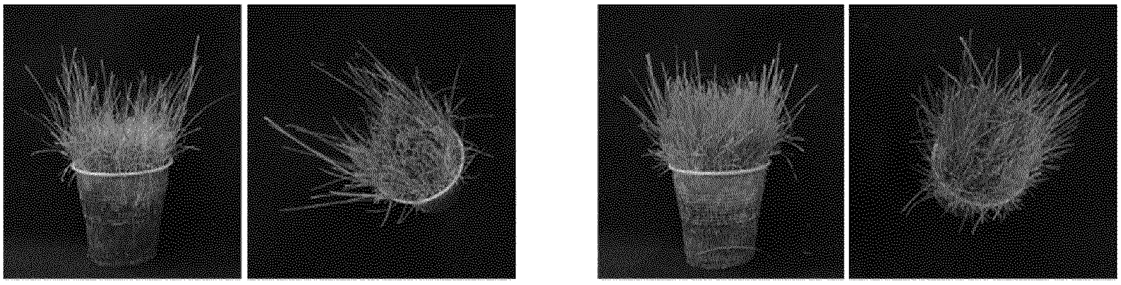

Non-addition group Hesperidin 0.6ppm

Fig. 1

**INTERNATIONAL SEARCH REPORT**

International application No. PCT/JP2020/001350

A. CLASSIFICATION OF SUBJECT MATTER
A01N 35/02(2006.01)i; A01N 35/04(2006.01)i; A01P 21/00(2006.01)i; A01N 25/00(2006.01)i; A01N 43/16(2006.01)i
FI: A01N43/16 C; A01N25/00 101; A01P21/00; A01N35/04; A01N43/16 A; A01N35/02
According to International Patent Classification (IPC) or to both national classification and IPC

B. FIELDS SEARCHED

Minimum documentation searched (classification system followed by classification symbols)
A01N35/02; A01N35/04; A01P21/00; A01N25/00; A01N43/16

Documentation searched other than minimum documentation to the extent that such documents are included in the fields searched

| | |
|---|---|
| Published examined utility model applications of Japan | 1922-1996 |
| Published unexamined utility model applications of Japan | 1971-2020 |
| Registered utility model specifications of Japan | 1996-2020 |
| Published registered utility model applications of Japan | 1994-2020 |

Electronic data base consulted during the international search (name of data base and, where practicable, search terms used)
JSTPlus/JMEDPlus/JST7580 (JDreamIII); CAplus/REGISTRY (STN)

C. DOCUMENTS CONSIDERED TO BE RELEVANT

| Category* | Citation of document, with indication, where appropriate, of the relevant passages | Relevant to claim No. |
|---|---|---|
| X | JP 54-101424 A (YAMAMOTO NOYAKU KK) 10.08.1979 (1979-08-10) claims, examples 1-14 | 1-7, 9-17 |
| Y | claims, examples 1-14 | 2 |
| A | | 8 |
| X | JP 09-268106 A (NIPPON KAYAKU CO., LTD., NIPPON KAYAKU FOOD TECHNO KK) 14.10.1997 (1997-10-14) claim 9, paragraphs [0006], [0013], examples | 1, 3-7, 9-17 |
| Y | claim 9, paragraphs [0006], [0013], examples | 2 |
| X | JP 06-279211 A (WAKAYAMA AGURI BIO KENKYU CENTER KK, AGUROSU KK) 04.10.1994 (1994-10-04) claims 1, 2, paragraph [0015], examples | 1, 3-6, 9-17 |
| Y | claims 1, 2, paragraph [0015], examples | 2 |

☒ Further documents are listed in the continuation of Box C. ☒ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 17 March 2020 (17.03.2020) | 31 March 2020 (31.03.2020) |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

**INTERNATIONAL SEARCH REPORT**

International application No. PCT/JP2020/001350

C (Continuation). DOCUMENTS CONSIDERED TO BE RELEVANT

| Category* | Citation of document, with indication, where appropriate, of the relevant passages | Relevant to claim No. |
|---|---|---|
| X | JP 04-504209 A (MICHIGAN STATE UNIVERSITY) 30.07.1992 (1992-07-30) claim 29, page 4, lower left column to lower right column, paragraph [0001], page 8, lower left column, paragraph [0001], page 9, upper right column, paragraph [0003], examples | 1-4, 9-12, 14, 16-17 |
| Y | claim 29, page 4, lower left column to lower right column, paragraph [0001], page 8, lower left column, paragraph [0001], page 9, upper right column, paragraph [0003], examples | 2 |
| X | JP 2009-55833 A (KAO CORP.) 19.03.2009 (2009-03-19) claims 2, 3, paragraphs [0009]-[0010], [0041], examples | 1-4, 9-12, 14, 16-17 |
| Y | claims 2, 3, paragraphs [0009]-[0010], [0041], examples | 2 |
| X | JP 2018-145136 A (TOHOKU UNIVERSITY) 20.09.2018 (2018-09-20) claims 1, 3, 6, paragraph [0033] | 1-4, 9-12, 14, 16-17 |
| Y | claims 1, 3, 6, paragraph [0033] | 2 |

Form PCT/ISA/210 (continuation of second sheet) (January 2015)

**INTERNATIONAL SEARCH REPORT**
Information on patent family members

International application No.
PCT/JP2020/001350

| Patent Documents referred in the Report | Publication Date | Patent Family | Publication Date |
|---|---|---|---|
| JP 54-101424 A | 10 Aug. 1979 | (Family: none) | |
| JP 09-268106 A | 14 Oct. 1997 | (Family: none) | |
| JP 06-279211 A | 04 Oct. 1994 | (Family: none) | |
| JP 04-504209 A | 30 Jul. 1992 | US 5002603 A claim 2, column 1, lines 16-58, column 7, lines 26-39, column 8, lines 52-66, examples<br>US 5085682 A<br>US 5125955 A<br>WO 1991/007868 A1<br>CN 1052329 A<br>CN 1186599 A<br>JP 7-63277 B | |
| JP 2009-55833 A | 19 Mar. 2009 | (Family: none) | |
| JP 2018-145136 A | 20 Sep. 2018 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2014160826 A
- JP H4295428 A
- JP S6319484 B
- JP 5544450 B


### Non-patent literature cited in the description


- **BRIAN, P. W.** Effects of gibberellins on plant growth and development. *Biological Reviews,* 1959, vol. 34.1, 37-77
- **BOTTINI RUBEN ; FABRICIO CASSAN ; PATRICIA PICCOLI.** Gibberellin production by bacteria and its involvement in plant growth promotion and yield increase. *Applied microbiology and biotechnology,* 2004, vol. 65.5, 497-503
- **NAKABAYASHI RYO et al.** Enhancement of oxidative and drought tolerance in Arabidopsis by overaccumulation of antioxidant flavonoids. *The Plant Journal,* 2014, vol. 77.3, 367-379
- Biological effects of hesperidin, a citrus flavonoid. (Note I): anti-inflammatory and analgesic activity. **GALATI, E. M. et al.** Farmaco. Societa chimica italiana, 1989, vol. 40, 709-712
- **COLBY, S. R.** Calculating synergistic and antagonistic responses of herbicide combinations. *Weeds,* 1967, vol. 15, 20-22